# EUROPÄISCHE PATENTSCHRIFT

(11) **EP 1 151 909 B1**
(45) Veröffentlichungstag und Bekanntmachung des Hinweises auf die Patenterteilung: **07.05.2008**
(21) Anmeldenummer: 01109001.6
(22) Anmeldetag: 11.04.2001
(51) Int. Cl.: B62D 25/20, B62D 35/02

(54) **Abdeckeinrichtung am Unterboden eines Kraftfahrzeuges**
Cover for the underside of a motor car
Couverture pour la partie inférieure d'un véhicule automobile

(30) Priorität: 05.05.2000 DE 10021855
(43) Veröffentlichungstag der Anmeldung: 07.11.2001
(73) Patentinhaber: Bayerische Motoren Werke Aktiengesellschaft, 80809 München (DE)
(72) Erfinder: Engelmann, Jürgen, 81739 München (DE); Klussmann, Sven, 82223 Eichenau (DE)

(56) Entgegenhaltungen:
- DE-A- 4 233 832
- DE-A- 4 316 959
- DE-A- 19 828 167
- DE-A- 19 836 970
- DE-C- 742 977
- US-A- 4 842 193
- US-A- 5 813 491

## Beschreibung

Die Erfindung betrifft eine Abdeckeinrichtung am Unterboden eines Kraftfahrzeugs, mit den im Oberbegriff des Patentanspruches 1 angegebenen Merkmalen.

Eine derartige Abdeckeinrichtung ist in der EP 0 888 956 A1 in einem hinterachsnahen Bodenbereich vorgesehen und weist ein elastisches Abdeckelement auf, das von unten einen Aufnahmeraum im Bodenblech überdeckt, in dem eine Hinterachse höhenverstellbar angeordnet ist. Bei größeren Höhenbewegungen kann die Hinterachse an dem Abdeckelement zur Anlage kommen bzw. bei einer weiteren Abwärtsbewegung zumindest einen Bereich des Abdeckelements elastisch nach unten verstellen. In der Normallage verläuft das Abdeckelement etwa bündig mit benachbarten Bodenteilen, wodurch der Unterboden in diesem Bereich strömungsgünstiger verläuft. Ein vom vorderen Motorraum und/oder von der Abgasanlage erwärmter Luftstrom dürfte temperaturempfindliche Bauteile, beispielsweise ein Hinterachsgetriebe, die im Bodenbereich des Fahrzeugs angeordnet sind anströmen, die sich dadurch aufheizen können bzw. vom Fahrtwind nicht ausreichend gekühlt werden. Die Wärmeabstrahlung der Abgasanlage dürfte eine zusätzliche Erwärmung dieser Bauteile bewirken.

Die Abdeckeinrichtung aus DE-A-43 16 959 kommt dem Anmeldungsgegenstand dadurch am nächsten, dass sie in einem Aufnahmeteil einen Aufnahmeraum aufweist, in dem ein Abgasrohr einer Abgasanlage angeordnet ist und der unten abgedeckt ist. Der Aufnahmeraum dieser Entgegenhaltung ist jedoch nicht nur unten abgedeckt, sondern an seinem Umfang vollkommen von Wandbereichen des Aufnahmeteiles verschlossen. Von der Abgasanlage erwärmte. Luft im Aufnahmeraum kann deshalb nur über die hintere stirnseitige Öffnung des Aufnahmeraumes abströmen. Das Aufnahmeteil erwärmt sich dadurch mehr und strahlt eventuell - trotz der aufwändigen Isolierung am Umfang - in einem erheblichen Maß Wärme ab, die einen Ausfall temperaturempfindlicher Bauteile in der Umgebung des Aufnahmeteiles bewirken kann. Bei einer besonders wirksamen Isolierung am Außenumfang des Aufnahmeteiles kann sich die Luft im Aufnahmeraum übermäßig erwärmen, wodurch die hinter der Abströmöffnung des Aufnahmeraumes befindlichen Bauteile temperaturfester auszubilden oder an einer anderen Stelle anzuordnen sind. Darüber hinaus schränkt das an der Fahrzeugkarosserie befestigte Aufnahmeteil die Bewegungsmöglichkeit der Abgasanlage in allen radiale Richtungen ein. Bei einem zu geringen Abstand von den Wänden des Aufnahmeteiles kann die Abgasanlage beispielsweise beim Überfahren von Bodenwellen an Wandbereichen des Aufnahmeteiles hart und geräuschvoll anschlagen. Um dies zu vermeiden, ist die Aufhängung der Abgasanlage weniger weich auszulegen, wodurch jedoch Geräusche von der Abgasanlage über die Aufhängung der Abgasanlage auf die Fahrzeugkarosserie übertragen werden können, die eventuell störend wirken.

Der Erfindung liegt die Aufgabe zugrunde, eine Abdeckeinrichtung mit den aus DE-A-4316959 bekannten Merkmalen im Oberbegriff des Patentanspruches 1 anzugeben, mit der Bauteile im Bodenbereich des Kraftfahrzeugs besser geschützt und weniger thermisch belastet sind.

Diese Aufgabe ist durch die im Patentanspruch 1 angegebenen Merkmale gelöst. Vorteilhafte Ausgestaltungen der Erfindung sind den Unteransprüchen entnehmbar.

Die Anordnung des Aufnahmeteiles unterhalb der Gelenkwelle bewirkt eine weitgehende Trennung des von dem Aufnahmeteil gebildeten Aufnahmeraumes von dem die Gelenkwelle aufnehmenden Raum. In dem Aufnahmeraum des Aufnahmeteiles ist zumindest ein Bereich des Abgasrohres der Abgasanlage angeordnet, wodurch dieser Bereich des Abgasrohres den die Gelenkwelle aufnehmenden Raum bzw. darin oder benachbart angeordnete Bauteile nicht oder weniger erwärmen kann, die eventuell temperaturempfindlich sind. Ein beispielsweise vom vorderen Motorraum abströmender Wärmestrom kann stirnseitig in den Aufnahmeraum des Aufnahmeteiles eingeleitet und vom Aufnahmeteil geführt an der hinteren Stirnseite des Aufnahmeteiles eventuell von temperaturempfindlichen Teilen weg abgeleitet werden. Ebenso kann in den über dem Aufnahmeteil befindlichen Raum beispielsweise stirnseitig von vom ein vom Fahrtwind abzweigender Luftstrom eintreten, der nach hinten geleitet eine Kühlung temperaturempfindlicher Bauteil in oder hinter diesem Raum bewirkt. Beispielsweise kann dieser nicht oder kaum erwärmte Luftstrom über dem Aufnahmeteil eine Kühlung eines Hinterachsgetriebes bewirken, das bisher wegen der diffusen bzw. erwärmten Luftströmung im Bodenbereich eines Kraftfahrzeugs über die Luftströmung nicht oder lediglich unzureichend zu kühlen war. Durch das Aufnahmeteil sind sowohl die im Aufnahmeraum angeordneten Teile, als auch die im darüber befindlichen Raum vorgesehenen Bauteile auch mechanisch beispielsweise bei einem Unfall besser geschützt. Erfindungsgemäß ist der Aufnahmeraum im Aufnahmeteil von unten von einem Abdeckteil überdeckt, das an dem Abgasrohr oder an einem damit verbundenen Teil vorzugsweise lösbar befestigt ist. Das Abdeckteil kann an seiner Unterseite weitgehend glatt ausgebildet sein und verläuft etwa bündig mit benachbarten Bodenflächen der Fahrzeugkarosserie oder daran beispielsweise lösbar befestigten Bodenelementen, die beispielsweise an der Unterseite weitgehend glatt und strömungsgünstig ausgebildet sind.

Ein Ausführungsbeispiel der Erfindung wird anhand einer Zeichnung näher erläutert. Es zeigen
- Figur 1: einen vereinfachten Querschnitt im mittleren Längsbereich der Abdeckeinrichtung,
- Figur 2: einen Querschnitt im hinteren Bereich der Abdeckeinrichtung und
- Figur 3: eine Ansicht auf den Unterboden des Kraftfahrzeugs.

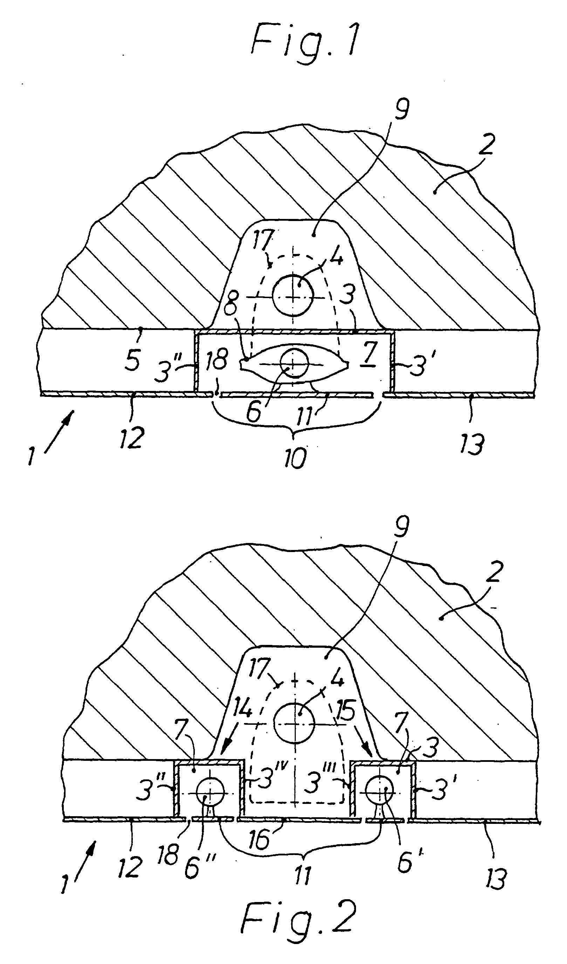

Die in Figur 1 im Querschnitt einfach dargestellte Abdeckeinrichtung ist am Unterboden 1 eines Kraftfahrzeugs 2 vorgesehen und weist ein im Querschnitt U-förmiges Aufnahmeteil 3 auf, das unterhalb einer Gelenkwelle 4 an einem unteren Wandabschnitt 5 der Fahrzeugkarosserie vorzugsweise lösbar befestigt ist. Das Aufnahmeteil 3 weist Seitenwände 3', 3" auf, die sich von dem mit dem Wandabschnitt 5 etwa bündigen Boden des Aufnahmeteiles 3 so weit nach unten erstrecken, dass in dem Aufnahmeteil 3 ein Aufnahmeraum 7 gebildet ist, in dem ein vom vorderen Motor nach hinten verlaufendes Abgasrohr 6 zumindest bereichsweise, sowie ein mit dem Abgasrohr 6 verbundener Schalldämpfer 8 vollständig, in den Aufnahmeraum 7 eingebracht sind. Das Aufnahmeteil 3 trennt den Aufnahmeraum 7 von dem darüber befindlichen Raum 9, der einen in Fahrzeuglängsrichtung verlaufenden Tunnel bildet, in dem die Gelenkwelle 4 zwischen dem vorderen Motor bzw. ein daran angeflanschtes Getriebe und einem Hinterachsgetriebe verläuft. Die von dem Abgasrohr 6 bzw. von dem Schalldämpfer 8 erwärmte Luft im Aufnahmeraum 7 kann somit die im Raum 9 befindliche Luft nicht oder kaum erwärmen. Insbesondere die von dem Abgasrohr 6 und dem Schalldämpfer 8 ausgehenden Wärmestrahlen werden von den Wänden des Aufnahmeteiles 3 weitgehend reflektiert bzw. mit dem an einer vorderen Stirnseite in den Aufnahmeraum 7 eintretenden Luftstrom nach hinten, eventuell von wärmeempfindlichen Teilen weg, abgeleitet. In dem Raum 9 befindliche temperaturempfindliche Bauteile werden von dem Luftstrom gekühlt, wodurch sich diese Bauteile nicht oder weniger erwärmen. Das Aufnahmeteil 3 erstreckt sich in Längsrichtung des Kraftfahrzeugs 2 etwa zwischen der Vorder- und Hinterachse und ist in der Figur in einem Querschnitt etwa im mittleren Längsbereich des Kraftfahrzeugs 2 dargestellt. Die untere Öffnung 10 des Aufnahmeteiles 3 ist von einem Abdeckteil 11 überdeckt, das in der Ruhelage des Kraftfahrzeugs 2 etwa bündig mit Windleitelementen 12, 13 verläuft, die an ihrer Unterseite wie das Abdeckteil 11 vorzugsweise glatt und strömungsgünstig ausgebildet sind. Die Windleitelemente 12, 13 können durch ein oder mehrere Bodenteile der Fahrzeugkarosserie gebildet sein, die fest oder wie beim Ausführungsbeispiel lösbar mit dem unteren Wandabschnitt 5 der Fahrzeugkarosserie verbunden sein können. Das Abdeckteil 11 ist vorzugsweise lösbar mit dem Abgasrohr 6 verbunden.

In Figur 2 ist ein Querschnitt im hinteren Bereich des Aufnahmeteiles 3 dargestellt, der sich in diesem Bereich in zwei Abschnitte 14, 15 gabelt und in jedem Seitenbereich einen nach unten offenen Querschnitt mit Seitenwänden 3', 3"' bzw. 3", 3^{IV} bildet. Bei der vorliegenden Ausführung gabelt sich auch die Abgasanlage des Fahrzeugs, sodass sich in jedem Abschnitt 14 bzw. 15 des Aufnahmeteiles 3 ein Abgasrohr 6', 6" befindet, die beispielsweise in das in Figur 1 dargestellte Abgasrohr 6 münden. Zwischen den Abschnitten 14, 15 des Aufnahmeteiles 3 befindet sich ein Windleitelement 16, das mit den anderen Windleitelementen 12, 13 sowie mit dem Abdeckteil 3 bündig verläuft und beispielsweise ebenfalls an der Unterseite glatt und strömungsgünstig ausgebildet ist. Das Abdeckteil 11 ist mit den beiden Abgasrohren 6', 6" vorzugsweise lösbar verbunden.

In den im Wesentlichen über dem Abdeckteil 3 befindlichen Raum 9, der sich nach hinten bis zu dem Windleitelement 16 erstreckt, kann beispielsweise stirnseitig von vorn ein vom kühlen Fahrtwind abzweigender Luftstrom eintreten und auf ein durch eine unterbrochene Umrisslinie dargestelltes Hinterachsgetriebe 17 strömen, das dadurch gekühlt wird. In dem Aufnahmeraum 7 des Aufnahmeteiles 3 können auch andere wärmebeständige Leitungen, wie beispielsweise eine Abgasleitung einer Zusatzheizung und dergleichen, aufgenommen bzw. abgestützt sein, die dann ebenfalls den im Wesentlichen über dem Aufnahmeteil 3 befindlichen Raum 9 bzw. darin angeordnete Bauteile nicht oder kaum erwärmen.

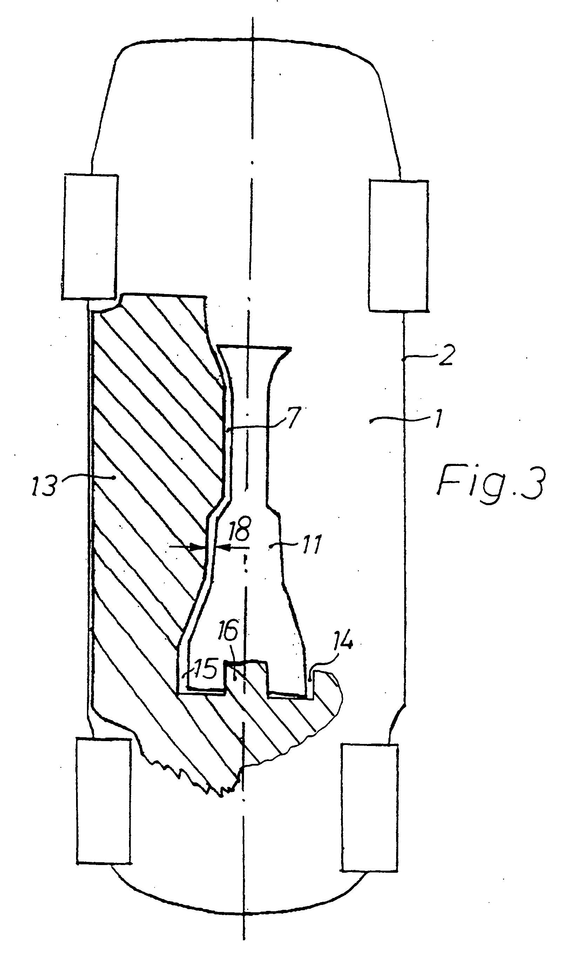

In Figur 3 ist eine Draufsicht auf den Unterboden 1 des Kraftfahrzeugs dargestellt, der entnehmbar ist, dass sich der Aufnahmeraum 7 und das Abdeckteil 11 lediglich etwa über die Länge des Fahrgastraumes erstrecken. In der Figur sind die Windleitelemente 13 und 16 erkennbar, die zusammen mit dem in den vorhergehenden Figuren dargestellten Windleitelement 12 einstückig ausgebildet sind. Zwischen dem Abdeckteil 11 und dem Windleitelement 13 ist ein seitlicher Spalt 18 gebildet, der beispielsweise 2 bis 3 cm beträgt. Das Abdeckteil 11 weist im mittleren Längsbereich etwa eine Breite von 20 bis 30 cm auf.

## Patentansprüche

1. Abdeckeinrichtung am Unterboden (1) eines Kraftfahrzeugs, an dem ein Abgasrohr (6, 6', 6") einer Abgasanlage angeordnet ist, das zumindest bereichsweise in einem karosseriefesten Aufnahmeraum (7) verläuft, der von einem Aufnahmeteil (3) gebildet ist, das den Aufnahmeraum (7) von einem über dem Aufnahmeteil (3) befindlichen Raum (9) trennt, mit einem Abdeckteil (11), das von unten mit einem Abgasrohr (6, 6', 6") und/oder mit einem an das Abgasrohr (6, 6', 6") angeschlossenen Schalldämpfer (8) lösbar oder fest verbunden ist, **dadurch gekennzeichnet, dass** der Aufnahmeraum (7) unten offen ist und der unten offene Bereich des Aufnahmeraumes (7) weitgehend von dem Abdeckteil (11) überdeckt ist, und der Unterboden (1) oder wenigstens ein daran befestigtes Windleitelement (12, 13, 16) etwa bündig mit der Unterseite des Abdeckteiles (11) verläuft, und zwischen dem Abdeckteil (11) und dem Unterboden (1) oder einem Windleitelement (12, 13, 16) am Unterboden (1) ein seitlicher Spalt (18) gebildet ist.

2. Abdeckeinrichtung nach Anspruch 1, **dadurch gekennzeichnet, dass** in dem Raum (9) über dem Aufnahmeteil (3) eine Gelenkwelle (4) zwischen einem vorderen Motor und einem Hinterachsgetriebe (17) verläuft.

3. Abdeckeinrichtung nach Anspruch 1 oder 2, **dadurch gekennzeichnet, dass** das Aufnahmeteil (3) zumindest bereichsweise einen U-förmigen Querschnitt aufweist.

4. Abdeckeinrichtung nach einem der Ansprüche 1 bis 3, **dadurch gekennzeichnet, dass** das Aufnahmeteil (3) in einem mittleren Bereich des Fahrzeugbodens angeordnet ist und etwa über die Länge des Fahrgastraumes verläuft.

5. Abdeckeinrichtung nach einem der Ansprüche 1 bis 4, **dadurch gekennzeichnet, dass** das Aufnahmeteil (3) etwa symmetrisch zu einer vertikalen Fahrzeuglängsebene ausgebildet ist.

6. Abdeckeinrichtung nach einem der Ansprüche 1 bis 5, **dadurch gekennzeichnet, dass** das Aufnahmeteil (3) hinten in einen seitlichen Bereich des Fahrzeugs verläuft und in diesem Bereich etwa vor und neben dem Hinterachsgetriebe endet bzw. in diesem Bereich abgeflacht ausgebildet ist.

7. Abdeckeinrichtung nach Anspruch 6, **dadurch gekennzeichnet, dass** das Aufnahmeteil (3) hinten gabelförmig ausgebildet ist und **dadurch** in die beiden seitlichen Bereiche des Kraftfahrzeugs (2) verläuft.

8. Abdeckeinrichtung nach einem der Ansprüche 1 bis 7, **dadurch gekennzeichnet, dass** die Seitenwände (3', 3", 3"', 3^{IV}) des Aufnahmeteiles (3) wenigstens eine solche Höhe aufweisen, dass sich der dem Aufnahmeraum (7) zugeordnete Bereich des Abgasrohres (6, 6', 6") und gegebenenfalls ein daran angeschlossener Schalldämpfer (8) vollständig in dem Aufnahmeraum (7) befinden.

9. Abdeckeinrichtung nach einem der Ansprüche 1 bis 8, **dadurch gekennzeichnet, dass** das Aufnahmeteil (3) und das Abdeckteil (11) den Aufnahmeraum (7) des Abdeckteiles (11) derart begrenzen, dass der Fahrtwind im Wesentlichen am vorderen Stirnbereich in den Aufnahmeraum (7) eintritt und über den hinteren Stirnbereich abströmt.

## Claims

1. A cover device on the underbody (1) of a motor vehicle and on which an exhaust pipe (6, 6', 6") of an exhaust system is disposed and extends at least partly in a receiving chamber (7) fixed to the body and formed by a receiving part (3) which separates the receiving chamber (7) from a space (9) above the receiving part (3), also comprising a cover part (11) which is releasably or non-releasably connected from below to an exhaust pipe (6, 6', 6") and/or to a silencer (8) connected to the exhaust pipe (6, 6', 6"), **characterised in that** the receiving chamber (7) is open at the bottom and the downwardly open region of the receiving chamber (7) is substantially covered by the cover part (11) and the underbody (1) or at least a wind-deflecting element (12, 13, 16) fastened thereto extends substantially flush with the underside of the cover part (11), and a gap (18) is formed at the side between the cover part (11) and the underbody (1) or a wind-deflecting element (1 2, 13, 16) on the underbody (1).

2. A cover device according to claim 1, **characterised in that** a universal-joint shaft (4) extends between the engine in front and a rear axle gear unit (17) in the space (9) over the receiving part (3).

3. A cover device according to claim 1 or claim 2, **characterised in that** the receiving part (3), in at least some places, has a U-shaped cross-section.

4. A cover device according to any of claims 1 to 3, **characterised in that** the receiving part (3) is disposed in a middle region of the vehicle body and extends approximately over the length of the passenger compartment.

5. A cover device according to any of claims 1 to 4, **characterised in that** the receiving part (3) is approximately symmetrical with a vertical longitudinal plane through the vehicle.

6. A cover device according to any of claims 1 to 5, **characterised in that** the receiving part (3) at the rear extends into a side region of the vehicle and in this region ends approximately in front of and near the rear axle gear unit or is flattened in this region.

7. A cover device according to claim 6, **characterised in that** the receiving part (3) is forked at the rear and thus extends into both side regions of the vehicle (2).

8. A cover device according to any of claims 1 to 7, **characterised in that** the side walls (3', 3", 3"', 3^{IV}) of the receiving part (3) have at least a height such that the region of the exhaust pipe (6, 6', 6") associated with the receiving chamber (7) and optionally an adjoining silencer (8) are completely in the receiving chamber (7).

9. A cover device according to any of claims 1 to 8, **characterised in that** the receiving part (3) and the cover part (11) bound the receiving chamber (7) of the cover part (11) so that the head wind enters substantially through the front end into the receiving chamber (7) and flows out via the rear end region.

## Revendications

1. Dispositif de couverture du dessous de caisse (1) d'un véhicule automobile le long duquel est disposée une tubulure (6, 6', 6") d'une installation de gaz d'échappement, en passant au moins localement dans un espace d'accueil (7) solidaire de la carrosserie et qui est constitué d'une pièce d'accueil (3) qui sépare l'espace d'accueil (7),d'un espace (9) situé au-dessus d'elle, une partie de couverture (11) étant reliée fixement ou de manière amovible par dessous à une tubulure de gaz d'échappement (6, 6', 6") et/ou à un pot d'échappement (8) lui-même raccordé à la tubulure (6, 6', 6"),
**caractérisé en ce que**
l'espace d'accueil (7) est ouvert vers le bas et la zone ouverte correspondante est recouverte largement par la partie de couverture (11), le dessous de caisse (1) ou au moins un élément de guidage de vent (12, 13, 16) qui lui est fixé s'étendant à peu près au même niveau que la face inférieure de la partie de couverture (11), avec formation d'une fente latérale (18) entre la partie de couverture (11) et le dessous de caisse (1) ou un élément de guidage de vent (12, 13, 16) monté sur ce dessous.

2. Dispositif de couverture selon la revendication 1,
**caractérisé en ce que**
dans l'espace (9) situé au-dessus de la pièce d'accueil (3) passe un arbre de transmission (4) reliant le moteur avant et une transmission d'essieu arrière (17).

3. Dispositif de couverture selon la revendication 1 ou 2,
**caractérisé en ce que**
la pièce d'accueil (3) a, au moins localement, une section transversale en forme d'U.

4. Dispositif de couverture selon une des revendications 1 à 3,
**caractérisé en ce que**
la pièce d'accueil (3) est disposée dans une zone médiane de plancher de véhicule et s'étend à peu près sur la longueur de l'habitacle.

5. Dispositif de couverture selon une des revendications 1 à 4,
**caractérisé en ce que**
la pièce d'accueil (3) est à peu près symétrique par rapport à un plan vertical longitudinal médian du véhicule.

6. Dispositif de couverture selon une des revendications 1 à 5,
**caractérisé en ce que**
la pièce d'accueil (3) s'étend vers l'arrière dans une zone latérale du véhicule où elle se termine à peu près en avant et à côté de la transmission d'essieu arrière, en étant aplatie dans cette zone.

7. Dispositif de couverture selon la revendication 6,
**caractérisé en ce que**
la pièce d'accueil (3) présente à l'arrière la forme d'une fourche dont les branches passent dans les deux zones latérales du véhicule (2).

8. Dispositif de couverture selon une des revendications 1 à 7,
**caractérisé en ce que**
les parois latérales (3', 3", 3"', 3"") de la pièce d'accueil (3) présentent au moins une hauteur telle que la zone de la tubulure d'échappement qui est associée à l'espace d'accueil (7) et également un pot d'échappement (8) qui lui est raccordé, se trouvent entièrement dans l'espace d'accueil (7).

9. Dispositif de couverture selon une des revendications 1 à 8,
**caractérisé en ce que**
la pièce d'accueil (3) et la partie de couverture (11) délimitent l'espace d'accueil (7) de la pièce d'accueil (3) de manière que le vent de la vitesse pénètre dans l'espace d'accueil (7) essentiellement à travers la zone frontale avant pour s'évacuer à travers la zone frontale arrière.
